(19) Europäisches Patentamt
European Patent Office
Office européen des brevets

(11) Veröffentlichungsnummer: **0 671 444 A1**

(12) # EUROPÄISCHE PATENTANMELDUNG

(21) Anmeldenummer: **95102950.3**

(22) Anmeldetag: **02.03.95**

(51) Int. Cl.⁶: **C09B 67/26**, C09B 57/02, C09B 67/00, //D21H21/28

(30) Priorität: **07.03.94 DE 4407496**

(43) Veröffentlichungstag der Anmeldung: **13.09.95 Patentblatt 95/37**

(84) Benannte Vertragsstaaten: **AT CH DE FR GB IT LI SE**

(71) Anmelder: **BASF AKTIENGESELLSCHAFT**
**D-67056 Ludwigshafen (DE)**

(72) Erfinder: **Bermes, Rudolf, Dr.**
**Pilgerstrasse 29**
**D-67069 Ludwigshafen (DE)**
Erfinder: **Breitschaft, Walter, Dr.**
**Pater-Kolbe-Weg 54**
**D-67071 Ludwigshafen (DE)**

(54) **Wässrige Farbstoffpräparationen, enthaltend Cumarinfarbstoffe.**

(57) Wäßrige Farbstoffpräparationen, enthaltend, bezogen auf das Gewicht der Präparation und berechnet als freie Säure, 12 bis 30 Gew.-% eines Farbstoffs der Formel

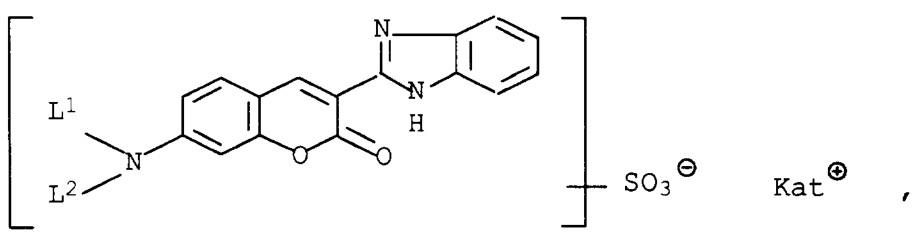

in der
$L^1$ und $L^2$ $C_1$-$C_4$-Alkyl und $Kat^{\oplus}$ ein Alkalimetallion oder ein gegebenenfalls substituiertes Ammoniumion bedeuten, ihre Verwendung zum Färben von Papierstoffen sowie ein Verfahren zum Färben von Papierstoffen.

EP 0 671 444 A1

Die vorliegende Erfindung betrifft neue wäßrige Farbstoffpräparationen, enthaltend, bezogen auf das Gewicht der Präparation und berechnet als freie Säure, 12 bis 30 Gew.-% eines Cumarinfarbstoffs der Formel I

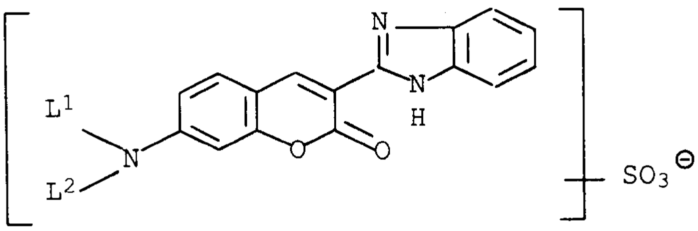

$Kat^{\oplus}$ (I),

in der

$L^1$ und $L^2$ unabhängig voneinander jeweils $C_1$-$C_4$-Alkyl und $Kat^{\oplus}$ ein Alkalimetallion oder ein Ammoniumion der Formel

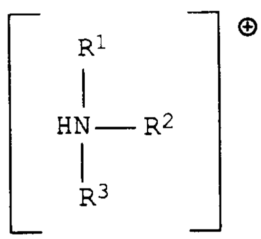

bedeuten, worin $R^1$, $R^2$ und $R^3$ unabhängig voneinander jeweils für Wasserstoff, $C_1$-$C_4$-Alkyl oder $C_2$-$C_4$-Hydroxyalkyl stehen, ihre Verwendung zum Färben von Papierstoffen, sowie ein Verfahren zum Färben von Papierstoffen.

Aus der DE-B-1 802 863 sind 3-(Benzimidazol-2'-yl)-7-dialkylaminocumarinsulfonsäuren und deren Natriumsalze sowie die Verwendung dieser Farbstoffe zum Färben von Textilien bekannt. Weiterhin beschreibt die DE-A-2 006 517 spezielle Ammoniumsalze dieser Cumarinsulfonsäuren und teilweise auch deren wäßrige Lösungen.

Aufgabe der vorliegenden Erfindung war es nun, neue wäßrige Farbstoffpräparationen bereitzustellen, die als Farbmittel sulfonierte Cumarinfarbstoffe enthalten und die über eine gute Lagerstabilität verfügen. Die neuen Farbstoffpräparationen sollten bei ihrer Anwendung brillante fluoreszierende Farbtöne ergeben.

Demgemäß wurden die eingangs näher bezeichneten Farbstoffpräparationen gefunden.

Alle in den obengenannten Formeln auftretenden Alkylgruppen können sowohl geradkettig als auch verzweigt sein.

Reste $L^1$, $L^2$, $R^1$, $R^2$ und $R^3$ sind z.B. Methyl, Ethyl, Propyl, Isopropyl, Butyl, Isobutyl, sec-Butyl oder tert-Butyl.

Reste $R^1$, $R^2$ und $R^3$ sind weiterhin z.B. 2-Hydroxyethyl, 2- oder 3-Hydroxypropyl, 1-Hydroxyprop-2-yl oder 2- oder 4-Hydroxybutyl.

Bevorzugt sind Farbstoffpräparationen, die einen Cumarinfarbstoff der Formel I enthalten, worin $L^1$ und $L^2$ jeweils Ethyl bedeuten.

Weiterhin bevorzugt sind Farbstoffpräparationen, die einen Cumarinfarbstoff der Formel I enthalten, worin $Kat^{\oplus}$ ein Lithium-, Natrium- oder Kaliumion, insbesondere ein Natriumion bedeutet.

Weitere Bestandteile der wäßrigen Farbstoffpräparationen können z.B. mit Wasser mischbare organische Lösungsmittel, wie Glykole, Alkylether von Glykolen, $\gamma$-Butyrolacton, N,N-Dimethylformamid oder N-Methylpyrrolidon, Löslichkeitsverbesserer, wie Harnstoff oder $\epsilon$-Caprolactam, Konservierungsstoffe oder Salze sein.

Diese Bestandteile weisen in der Regel einen Anteil von 0 bis 15 Gew.-%, vorzugsweise 0 bis 10 Gew.-% und insbesondere 0 bis 5 Gew.-%, jeweils bezogen auf das Gewicht der Präparation, auf.

Es versteht sich, daß die Summe der einzelnen Bestandteile der wäßrigen Farbstoffpräparationen jeweils 100 Gew.-% ergibt.

Bevorzugt sind wäßrige Farbstoffpräparationen, die, jeweils bezogen auf das Gewicht der Präparation und berechnet als freie Säure, 12 bis 25 Gew.-%, insbesondere 15 bis 25 Gew.-%, an Cumarinfarbstoff aufweisen.

Die erfindungsgemäßen Farbstoffpräparationen können auf an sich bekannte Weise erhalten werden. Beispielsweise kann man die freien Cumarinsulfonsäuren, die gemäß der in der DE-A-1 802 863 beschriebenen Methode hergestellt werden können, in wäßriger Lösung mit den entsprechenden Alkalimetallhydroxiden (oder deren wäßrigen Lösungen) oder Aminen umsetzen und gegebenenfalls mit den weiteren Bestandteilen vermischen.

Die neuen wäßrigen Farbstoffpräparationen eignen sich in vorteilhafter Weise zum Färben von Papierstoffen.

Es wurde weiterhin gefunden, daß das Färben von Papierstoffen vorteilhaft gelingt, wenn man eine wäßrige Flotte verwendet, die einen Cumarinfarbstoff der Formel I

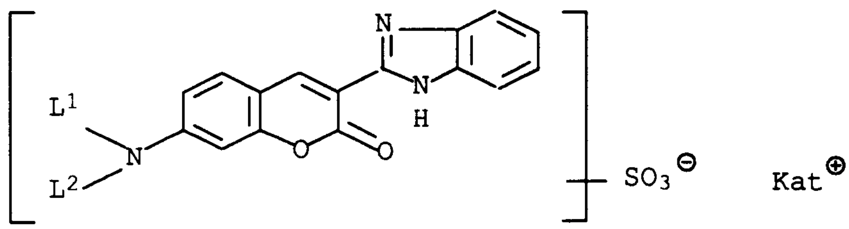

(I)

enthält, in der

$L^1$ und $L^2$ unabhängig voneinander jeweils $C_1$-$C_4$-Alkyl und $Kat^\oplus$ ein Alkalimetallion oder ein Ammoniumion der Formel

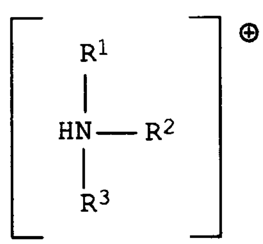

bedeuten, worin $R^1$, $R^2$ und $R^3$ unabhängig voneinander jeweils für Wasserstoff, $C_1$-$C_4$-Alkyl oder $C_2$-$C_4$-Hydroxyalkyl stehen.

Besonders zu nennen ist die Masse- oder Oberflächenfärbung von Papier, insbesondere für geleimte oder ungeleimte Sorten auf Basis von holzfreien, holzhaltigen oder altpapierhaltigen Rohstoffen. Dabei können die bei der Papierfärbung und -herstellung üblichen Hilfsmittel mitverwendet werden.

Bevorzugt ist die Masse- oder Oberflächenfärbung von gebleichtem oder ungebleichtem Zellstoff unterschiedlicher Provenienz, wie Nadel- oder Laubholz-Sulfit- und/oder Sulfatzellstoff im Masse- oder Oberflächenzusatz. Beispielhaft für die Oberflächenfärbung, wo das Papier vor Erreichen der Trockenpartie gefärbt wird, sei die Sprüh-, Tauch- oder Leimpressenfärbung genannt.

Bei der Massefärbung erfolgt die Anwendung der Farbstoffe der Formel I vorzugsweise in Gegenwart von Fixiermitteln, insbesondere von kationischen Fixiermitteln.

Geeignete kationische Fixiermittel leiten sich z.B. von folgenden Produkten ab:

A) Homopolymerisate von Diallyldimethylammoniumchlorid und Copolymerisate von Diallyldimethylammoniumchlorid mit Acrylamid und/oder Methacrylamid, deren K-Wert mindestens 30 beträgt,

B) Homopolymerisate von Vinylimidazolen und Copolymerisate von Vinylimidazolen mit Acrylamid und/oder Methacrylamid, die gegebenenfalls mit Epichlorhydrin umgesetzt worden sind,

C) Homopolymerisate von Vinylimidazolin und Copolymerisate von Vinylimidazolin mit Acrylamid und/oder Methacrylamid,

D) Copolymerisate, die Vinylamin-Einheiten einpolymerisiert enthalten,

E) Copolymerisate von Acrylamid mit ($C_1$-$C_4$-Dialkylamino)-$C_1$-$C_4$-alkylacrylaten und/oder -methacrylaten,

F) Polyethylenimine und Polyamidoamine,

G) Kondensationsprodukte aus Formaldehyd, Dicyandiamid und gegebenenfalls Harnstoff,

H) Kondensationsprodukte aus Melamin und Formaldehyd,

I) Polykondensate aus Epichlorhydrin und Dimethylamin oder

K) Polykondensate aus Adipinsäure und Polyaminen.

Kationische Fixiermittel der obengenannten Klasse (A) sind an sich bekannte Homopolymerisate von Diallyldimethylammoniumchlorid und Copolymerisate von Diallyldimethylammoniumchlorid mit Acrylamid und/oder Methacrylamid. Die Copolymerisation kann dabei in jedem beliebigen Monomerverhältnis vorgenommen werden. Der K-Wert der Homo- und Copolymerisate des Diallyldimethylammoniumchlorids beträgt mindestens 30, vorzugsweise 95 bis 180.

Kationische Fixiermittel der obengenannten Klasse (B) sind an sich bekannte Homopolymerisate des Vinylimidazols der Formel II

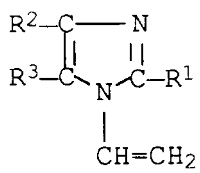

(II),

in der

$R^1$, $R^2$ und $R^3$ unabhängig voneinander jeweils Wasserstoff oder Methyl und $R^1$ außerdem $C_2$-$C_4$-Alkyl bedeuten, und wasserlösliche Copolymerisate aus

a) mindestens 10 Gew.-% eines Vinylimidazols der Formel II,

b) bis zu 90 Gew.-% Acrylamid und/oder Methacrylamid sowie gegebenenfalls

c) bis zu 30 Gew.-% Acrylnitril, Methacrylnitril, Vinylacetat, Vinylpyrrolidon, einer $C_3$-$C_5$-ethylenisch ungesättigten Carbonsäure oder deren Ester, wobei die Homo- und Copolymerisate gegebenenfalls mit Epichlorhydrin im Verhältnis 0,02 bis 2,0 mol Epichlorhydrin pro mol basischem Stickstoff äquivalent umgesetzt worden sind.

Kationische Fixiermittel der Klasse (B) sind beispielsweise in der EP-A-146 000 beschrieben.

Kationische Fixiermittel der obengenannten Klasse (C) sind an sich bekannte Homopolymerisate des Vinylimidazolins der Formel III

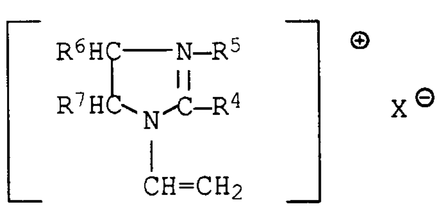

(III),

in der

$R^4$ Wasserstoff, $C_1$-$C_{18}$-Alkyl, oder den Rest

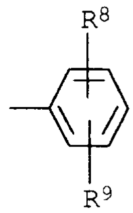

,

wobei
$R^8$, $R^9$ unabhängig voneinander jeweils für Wasserstoff, $C_1$-$C_4$-Alkyl oder Chlor stehen,
$R^5$ Wasserstoff, $C_1$-$C_{18}$-Alkyl, Benzyl oder

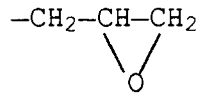

,

$R^6$ und $R^7$ unabhängig voneinander jeweils Wasserstoff oder $C_1$-$C_4$-Alkyl und
$X^{\ominus}$ ein Anion, vorzugsweise Chlorid, Bromid, Sulfat, Methosulfat, Ethosulfat oder ein Carboxylat, bedeuten, und wasserlösliche Copolymerisate, die

a) mindestens 1 Gew.-% einer Verbindung der Formel II und
b) Acrylamid und/oder Methacrylamid

einpolymerisiert enthalten, wobei der K-Wert der Homo- und Copolymerisate 50 bis 250 beträgt.

Kationische Fixiermittel der Klasse (C) sind beispielsweise in der DE-A-3 515 086 beschrieben.

Kationische Fixiermittel der obengenannten Klasse (D) sind an sich bekannte Copolymerisate, die Vinylamin-Einheiten einpolymerisiert enthalten, die durch Copolymerisierung von

a) 95 bis 10 Mol.-% N-Vinylformamid mit
b) 5 bis 90 Mol.-% eines ethylenisch ungesättigten Monomeren aus der Gruppe Vinylacetat, Vinylpropionat, $C_1$-$C_4$-Alkylvinylether, N-Vinylpyrrolidon sowie Ester, Nitrile und Amide von Acrylsäure und Methacrylsäure und anschließender Abspaltung von 30 bis 100 Mol.-% der Formylgruppen aus dem Copolymerisat, erhalten werden.

Kationische Fixiermittel der Klasse (D) sind beispielsweise in der EP-A-216 387 beschrieben.

Kationische Fixiermittel der obengenannten Klasse (E) sind an sich bekannte Copolymerisate aus Acrylamid und 10 bis 90 Gew.-%, vorzugsweise 30 bis 70 Gew.-% ($C_1$-$C_4$-Dialkylamino)-$C_1$-$C_4$-alkylacrylaten und/oder -methacrylaten.

Kationische Fixiermittel der obengenannten Klasse (F) sind an sich bekannte Polyethylenimine, die durch Polymerisation von Ethylenimin in wäßriger Lösung in Gegenwart saurer Katalysatoren erhalten werden. Sie weisen in 10 gew.-%iger wäßriger Lösung bei einem pH-Wert von 7 eine Viskosität im Bereich von 5 bis 100 mPas, vorzugsweise 10 bis 40 mPas auf (gemessen bei 20 °C, Rotationsviskosimeter, 20 U/min). Die Polymerisate können mit organischen Säuren wie Ameisensäure, Essigsäure oder Propionsäure oder mit anorganischen Säuren, wie Salzsäure, Schwefelsäure oder Phosphorsäure neutralisiert sein.

Weiterhin sind Polyamidoamine, die mit Epichlorhydrin vernetzt sind, zu nennen. Geeignete Produkte dieser Art sind beispielsweise aus der US-A-2 926 116 bekannt. Sie werden hergestellt, indem man eine Dicarbonsäure, wie Adipinsäure, mit einem Polyamin, z.B. Diethylentriamin oder Tetraethylenpentamin, kondensiert und das dabei erhaltene Harz soweit mit Epichlorhydrin vernetzt, daß man noch wasserlösliche Reaktionsprodukte erhält. Diese Polymeren haben in 10 gew.-%iger wäßriger Lösung bei einer Temperatur von 20 °C eine Viskosität von 20 bis 200 mPas (gemessen mit einem Rotations-Viskosimeter bei 20 U/min und 20 °C bei einem Feststoffgehalt von 10 Gew.-% in Wasser).

Zu dieser Gruppe von kationischen Polymeren gehören auch mit Ethylenimin gepfropfte Polyamidoamine, die mit Epichlorhydrin oder gemäß der DE-A-2 434 816 mit Reaktionsprodukten vernetzt sind, die durch Umsetzung der endständigen OH-Gruppen von Polyalkylenoxiden mit 8 bis 100 Alkylenoxid-Einheiten (vorzugsweise Polyethylenoxiden) mit mindestens äquivalenten Mengen Epichlorhydrin erhalten werden. Die Viskosität der mit Ethylenimin gepfropften und vernetzten, wasserlöslichen Produkte beträgt 300 bis 2500 mPas (gemessen mit einem Rotationsviskosimeter bei 20 U/min und 20 °C bei einem Feststoffgehalt von 10 Gew.-% in Wasser).

Kationische Fixiermittel der obengenannten Klasse (G) sind an sich bekannte Kondensationsprodukte aus Formaldehyd, Dicyandiamid und gegebenenfalls Harnstoff, die ein Molverhältnis von Dicyandiamid : Harnstoff : Formaldehyd von 1 : 0 : 3 bis 3 : 2 : 5 aufweisen.

Der obengenannte K-Wert der Polymerisate wurde jeweils nach H. Fikentscher, Cellulosechemie, 13, 58-64 und 71-74 (1932) bei einer Temperatur von 25 °C in 5 gew.-%iger wäßriger Kochsalzlösung und bei einer Polymerkonzentration von 0,5 Gew.-% bestimmt; dabei bedeutet $K = k \cdot 10^3$.

Die kationischen Fixiermittel können in einer Menge von 0,05 bis 5 Gew.-%, vorzugsweise 0,1 bis 1,5 Gew.-%, jeweils berechnet als Feststoff und bezogen auf die zu färbende trockene Papiermasse, angewendet werden.

Die Farbstoffe der Formel I können in einer Menge von 0,01 bis 1,5 Gew.-%, vorzugsweise 0,01 bis 1,0 Gew.-%, jeweils bezogen auf die zu färbende trockene Papiermasse und den reinen Farbstoff, angewendet werden.

Die genannten Fixiermittel können der zu färbenden Papiermasse vor oder nach Zugabe der Farbstoffe zugesetzt werden. Der pH-Wert der Färbeflotte kann bei 4 bis 9 liegen, bevorzugt ist der pH-Bereich von 6 bis 8.

Mit den neuen Farbstoffpräparationen erhält man Färbungen in brillanten fluoreszierenden Gelbtönen, die gute Gebrauchseigenschaften aufweisen. Besonders bemerkenswert ist dabei, daß die Fluoreszenz der Cumarinfarbstoffe der Formel I nicht gelöscht wird.

Die mit den erfindungsgemäßen Farbstoffpräparationen und mittels des erfindungsgemäßen Verfahrens erhaltenen Papierfärbungen sind oxidativ und reduktiv sehr gut bleichbar, was im Hinblick auf die Wiedererwendung von gefärbtem Ausschuß und/oder Altpapier nach einem chemischen Bleichvorgang (z.B. im Deinkingprozeß) einen bedeutenden Vorteil darstellt.

Die folgenden Beispiele sollen die Erfindung näher erläutern. Die dort genannten Teile sind Gewichtsteile.

Beispiel 1

333 g 3-(Benzimidazol-2'-yl)-7-diethylaminocumarin wurden, wie im Beispiel der DE-B-1 802 863 beschrieben, sulfoniert. Das Sulfonierungsprodukt wurde durch Einrühren in Wasser gefällt, abgesaugt und mit Wasser weitgehend säurefrei gewaschen. Man erhielt 1073 g eines Nutschkuchens, der einen Feststoffgehalt von 39,6 % aufwies.

53,7 g dieses Nutschkuchens wurden mit 110 ml Wasser angerührt und mit 1,3 g Lithiumhydroxid (98 gew.-%ig) versetzt, wobei der Farbstoff sich allmählich auflöste. Die resultierende Lösung wurde klärfiltriert und war dann unmittelbar gebrauchsfertig. Die Lösung, die einen pH-Wert von 10,2 und 12,5 Gew.-%, bezogen auf das Gewicht der Lösung, Cumarinfarbstoff, berechnet als freie Säure, aufwies, war auch nach mehrmonatigem Lagern bei Raumtemperatur noch stabil.

Beispiel 2

53,7 g des in Beispiel 1 erhaltenen Nutschkuchens wurden in 40 ml Wasser und 2,1 g Natriumhydroxid unter Rühren aufgelöst. Man erhielt eine lagerbeständige Lösung des Farbstoffs, die einen pH-Wert von 8,0 und 21,6 Gew.-%, bezogen auf das Gewicht der Lösung, Cumarinfarbstoff, berechnet als freie Säure, aufwies.

Beispiel 3

Man verfuhr analog Beispiel 2, verwendete jedoch 100 ml Wasser und 4,5 g 25 gew.-%ige wäßrige Ammoniaklösung. Man erhielt ebenfalls eine lagerbeständige Lösung, die 13,0 Gew.-%, bezogen auf das Gewicht der Lösung, Cumarinfarbstoff, berechnet als freie Säure, aufwies.

In analoger Weise werden lagerbeständige Lösungen erhalten, wenn man anstelle der wäßrigen Ammoniaklösung äquivalente Mengen der folgenden Basen verwendet.

| Beispiel Nr. | Base |
|---|---|
| 4 | Kaliumhydroxid |
| 5 | Ethanolamin |
| 6 | Diethanolamin |
| 7 | Triethanolamin |
| 8 | N-Methylethanolamin |
| 9 | N,N-Dimethylethanolamin |
| 10 | N,N-Diethylethanolamin |
| 11 | 2-Aminopropan-1-ol |
| 12 | 2-N,N-Dimethylaminopropan-1-ol |

Beispiel 13 (Anwendung)

50 Teile eines Gemisches aus 70 Gew.-% gebleichtem Kiefersulfatzellstoff und 30 Gew.-% gebleichtem Birkensulfatzellstoff in 2000 Teilen Trinkwasser wurden mit 0,42 Teilen der Farbstofflösung aus Beispiel 2 versetzt und 5 min gerührt. Danach wurden 0,38 Teile eines 45 gew.-%igen handelsüblichen Polymerisats aus Dicyandiamid, Harnstoff und Formaldehyd zugesetzt. Nach 10 min Rühren wurde in der üblichen Weise auf einem Frank-Blattbildner ein Papierblatt hergestellt. Die erhaltene grünstichiggelbe, fluoreszierende Färbung zeigt gute Licht- und Naßechtheiten, das Färbeabwasser ist nur wenig angefärbt.

Beispiel 14 (Anwendung)

Ein aus 70 Gew.-% gebleichtem Kiefersulfatzellstoff und 30 Gew.-% gebleichtem Birkensulfatzellstoff hergestelltes saugfähiges Papierblatt wurde in eine 0,5 Gew.-% der Farbstoffpräparation aus Beispiel 2 enthaltende wäßrige Färbelösung getaucht und anschließend getrocknet. Man erhielt eine grünstichiggelbe Färbung von hoher Brillanz.

**Patentansprüche**

**1.** Wäßrige Farbstoffpräparationen, enthaltend, bezogen auf das Gewicht der Präparation und berechnet als freie Säure, 12 bis 30 Gew.-% eines Cumarinfarbstoffs der Formel I

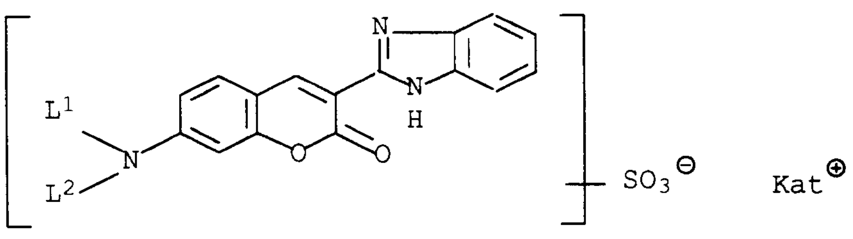

(I),

in der
$L^1$ und $L^2$ unabhängig voneinander jeweils $C_1$-$C_4$-Alkyl und $Kat^{\oplus}$ ein Alkalimetallion oder ein Ammoniumion der Formel

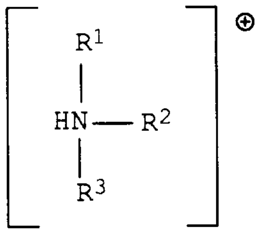

bedeuten, worin $R^1$, $R^2$ und $R^3$ unabhängig voneinander jeweils für Wasserstoff, $C_1$-$C_4$-Alkyl oder $C_2$-$C_4$-Hydroxyalkyl stehen.

2. Farbstoffpräparationen nach Anspruch 1, dadurch gekennzeichnet, daß $L^1$ und $L^2$ jeweils Ethyl bedeuten.

3. Farbstoffpräparationen nach Anspruch 1, dadurch gekennzeichnet, daß $Kat^{\oplus}$ ein Lithium-, Natrium- oder Kaliumion bedeutet.

4. Farbstoffpräparationen nach Anspruch 1, enthaltend 12 bis 25 Gew.-%, berechnet als freie Säure, eines Cumarinfarbstoffs.

5. Verwendung der wäßrigen Farbstoffpräparationen gemäß Anspruch 1 zum Färben von Papierstoffen.

6. Verfahren zum Färben von Papierstoffen, dadurch gekennzeichnet, daß man eine wäßrige Flotte verwendet, die einen Cumarinfarbstoff der Formel I

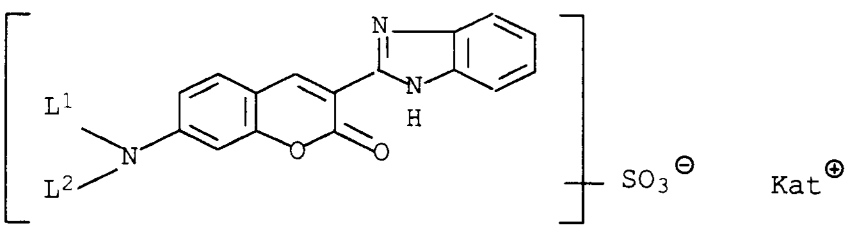

(I)

enthält, in der
$L^1$ und $L^2$ unabhängig voneinander jeweils $C_1$-$C_4$-Alkyl und $Kat^{\oplus}$ ein Alkalimetallion oder ein Ammoniumion der Formel

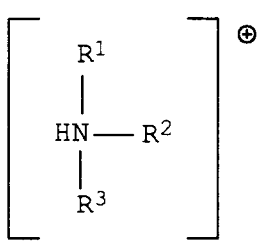

bedeuten, worin $R^1$, $R^2$ und $R^3$ unabhängig voneinander jeweils für Wasserstoff, $C_1$-$C_4$-Alkyl oder $C_2$-$C_4$-Hydroxyalkyl stehen.

Europäisches Patentamt

# EUROPÄISCHER RECHERCHENBERICHT

Nummer der Anmeldung
EP 95 10 2950

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE-A-30 44 128 (BAYER AG) 15.Juli 1982<br>* Beispiele * | 1-6 | C09B67/26<br>C09B57/02<br>C09B67/00<br>//D21H21/28 |
| D,Y | DE-A-18 02 863 (BASF) 30.Juli 1970<br>* das ganze Dokument * | 1-6 | |
| A | FR-A-2 132 680 (HOECHST) 24.November 1972<br>* Seite 4, Zeile 10 - Zeile 14 * | 1-6 | |
| A | EP-A-0 030 337 (BAYER AG) 17.Juni 1981<br>* Zusammenfassung * | 1-6 | |
| D,Y | DE-A-20 06 517 (BASF) 26.August 1971<br>* das ganze Dokument * | 1-6 | |
| A | EP-A-0 022 066 (CIBA GEIGY AG ;CLAYTON ANILINE CO LTD (CH)) 7.Januar 1981<br>* Zusammenfassung * | 1-6 | |
| | | | RECHERCHIERTE SACHGEBIETE (Int.Cl.6) |
| | | | C09B<br>D21H |

Der vorliegende Recherchenbericht wurde für alle Patentansprüche erstellt

| Recherchenort | Abschlußdatum der Recherche | Prüfer |
|---|---|---|
| DEN HAAG | 13.Juni 1995 | Dauksch, H |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)